# EUROPÄISCHE PATENTSCHRIFT

(11) **EP 4 670 456 B1**
(45) Veröffentlichungstag und Bekanntmachung des Hinweises auf die Patenterteilung: **20.05.2026**
(21) Anmeldenummer: 24718032.6
(22) Anmeldetag: 21.03.2024
(51) Int. Cl.: H04W 88/04, H04W 88/06, H04W 88/08, H04W 84/18, H04W 84/00, G06Q 50/04, G06Q 50/00

(54) **VERFAHREN ZUM BETREIBEN EINES DRAHTLOSEN INDUSTRIELLEN EDGE-CLOUD-SYSTEMS MIT EINER ODER MEHREREN BASISFUNKSTATIONEN, SOWIE BASISFUNKSTATION UND ENDGERÄT**
METHOD FOR OPERATING AN INDUSTRIAL EDGE CLOUD WIRELESS SYSTEM WITH ONE OR MORE BASE RADIO STATIONS, AND BASE RADIO STATION AND TERMINAL
PROCÉDÉ DE FONCTIONNEMENT D'UN SYSTÈME INDUSTRIEL SANS FIL EN NUAGE DE BORD COMPRENANT UNE OU PLUSIEURS STATIONS RADIO DE BASE, STATION RADIO DE BASE ET TERMINAL

(30) Priorität: 27.03.2023 EP 23164247; 31.05.2023 DE 102023205078
(43) Veröffentlichungstag der Anmeldung: 31.12.2025
(73) Patentinhaber: Siemens Aktiengesellschaft, 80333 München (DE)
(72) Erfinder: SAUER, Markus, 85748 Garching (DE); ZEIGER, Florian, 85748 Garching (DE)
(74) Vertreter: Siemens Patent Attorneys
(86) Internationale Anmeldenummer: PCT/EP2024/057524
(87) Internationale Veröffentlichungsnummer: WO 2024/200178

(56) Entgegenhaltungen:
- US-A1- 2022 116 108
- US-A1- 2023 082 507

## Beschreibung

Die Erfindung betrifft ein Verfahren zum Betreiben eines drahtlosen industriellen Edge-Cloud-Systems mit einer oder mehreren Basisfunkstationen. Die Erfindung betrifft zudem eine Basisfunkstation und ein Endgerät.

Drahtlose Kommunikationssysteme wie 5G- oder zukünftige 6G-Systeme wurden entwickelt, um Cloud-Technologien für eine bessere Skalierbarkeit zu nutzen. Dennoch haben solche Kommunikationssysteme eine definierte und eingeschränkte Abdeckung. Zahlreiche industrielle Anwendungen, insbesondere bei Großbaustellen, erfordern eine großflächige Abdeckung. Ein Anwendungsfall stellt etwa eine Autobahnbaustelle dar, bei welcher vorübergehend Funkeinheiten, etwa Antennen oder Funkgeräte oder Kommunikationsgeräte, installiert werden müssen. In der Regel ist eine kabelgebundene Verbindung zwischen solchen Funkeinheiten nicht möglich oder nicht erwünscht. Typischerweise werden daher oft proprietäre gerichtete drahtlose Verbindungen zur Überbrückung zwischen den Antennen installiert.

Aus der US2023/082507A1 geht ein Benutzergerät (UE) für ein drahtloses Kommunikationssystem hervor, das über mindestens ein Relais-UE mithilfe einer Sidelink-Schnittstelle mit einem Kernnetz des drahtlosen Kommunikationssystems kommuniziert. Wenn das UE über das Relais-UE kommuniziert, richtet es eine Netzwerkschicht in seinem Protokollstapel ein. Diese Schicht stellt während des Kommunikationsprozesses die notwendigen Steuerinformationen bereit. Das Relay-UE (Benutzergerät) erweitert die Funkabdeckung des drahtlosen Kommunikationssystems, indem es als Vermittler zwischen anderen UEs und dem Netzwerk fungiert. Das Relay-UE kommuniziert über eine Sidelink-Schnittstelle mit dem Netzwerk und anderen UEs, wodurch es Daten zwischen ihnen weiterleiten kann. Wenn ein UE außerhalb der direkten Reichweite des Netzwerks ist, aber immer noch über das Relay- UE eine Verbindung herstellen kann, übernimmt das Relay-UE diese Aufgabe. 1

Aus der US2022/116108A1 geht eine drahtlose Basisstation hervor, die einen Sender und einen Empfänger umfasst. Der Sender sendet ein Steuersignal und Betriebssignale an ein zweites drahtloses Kommunikationsendgerät. Das Steuersignal weist das zweite Endgerät an, ein Signal zu senden, das eine Endgerät-zu-Endgerät-Kommunikation zwischen einem ersten drahtlosen Kommunikationsendgerät und dem zweiten drahtlosen Kommunikationsendgerät anfordert.

Es besteht also ein Bedarf, künftige Edge-Cloud-Systeme wie insbesondere 5G- und 6G-Systeme so zu modifizieren, dass eine bedarfsgerechte Erweiterung der Abdeckung mit ihren eigenen integralen Technologiebausteinen zu ermöglichen.

Es ist vor diesem Hintergrund des Standes der Technik die Aufgabe der Erfindung, ein verbessertes Verfahren zum Betreiben eines drahtlosen industriellen Edge-Cloud-Systems mit einem mehreren Basisfunkstationen anzugeben. Es ist zudem Aufgabe der Erfindung, eine verbesserte Basisfunkstation und ein verbessertes Endgerät anzugeben.

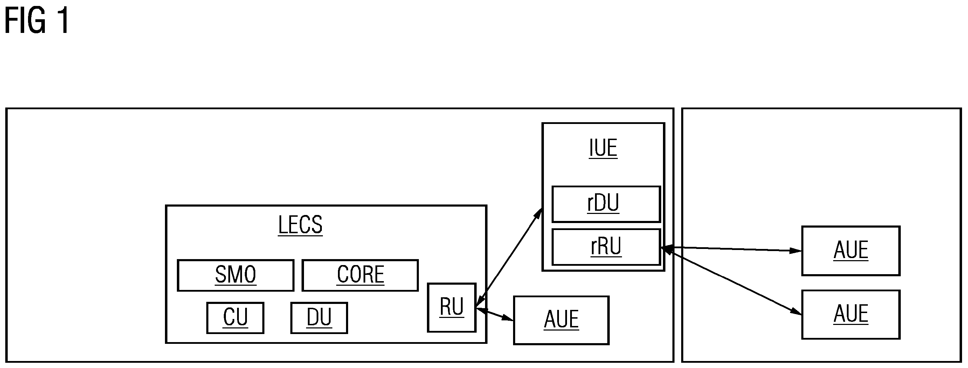

Diese Aufgabe der Erfindung wird mit einem Verfahren zum Betreiben eines drahtlosen industriellen Edge-Cloud-Systems mit einer oder mehreren Basisfunkstationen mit den in Anspruch 1 angegebenen Merkmalen sowie mit einer Basisfunkstation mit den in Anspruch 7 angegebenen Merkmalen und mit einem Endgerät mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben eines drahtlosen industriellen Edge-Cloud-Systems mit mindestens einer ersten Basisfunkstation wird eine Kommunikationsverbindung der mindestens einen ersten Basisfunkstation oder mindestens einer der Basisfunkstationen zu einem Endgerät aufgebaut und das Endgerät als zusätzliche zweite Basisfunkstation herangezogen und eingerichtet.

Kernidee der Erfindung ist es also, mittels der Einbindung eines Endgeräts als zusätzliche zweite Basisfunkstation eine doppelte Verwendung einer mobilen Kommunikationstechnologie wie insbesondere 5G oder 6G sowohl für die Realisierung der Backbone-Kommunikation des Endgeräts als auch für die Benutzer- und/oder Anwendungskommunikation weiterer Endgeräte auf der Grundlage bestehender Benutzerkommunikationskonzepte und - technologien des mobilen Kommunikationsstapels zu ermöglichen. Dazu wird das Endgerät erfindungsgemäß wie oben beschrieben herangezogen.

Mittels des erfindungsgemäßen Verfahrens kann vorteilhaft eine rekursive Erweiterung der Abdeckung eines drahtlosen Kommunikationssystems ermöglicht werden, indem entfernte Endgeräte Schritt für Schritt als jeweils zweite Basisfunkstationen durch "On-Board"-Funktechnologie verbunden werden. Erfindungsgemäß ist es nicht erforderlich, verschiedene Kommunikationstechnologien aufeinander abzustimmen, da die grundsätzliche Kommunikationstechnik, die zur Kommunikation zwischen Endgeräten mit dem Basissystem herangezogen wird, genutzt werden kann, um selbst eine zweite Basisfunkstation zu realisieren. Es sind also keine nahtlosen Überbrückungen zwischen verschiedenen Technologien erforderlich.

Erfindungsgemäß ist es vorteilhaft nicht erforderlich, mobile weitere Basisfunkstationen vorzusehen oder mittels unterschiedlicher Kommunikationstechnologien an die Backbone-Infrastruktur anzubinden. Das erfindungsgemäße Verfahren lässt sich zudem flexibel unter unterschiedlichen Umgebungsbedingungen einsetzen, etwa unabhängig vom Wetter, vom Zustand neu gebauter Komponenten und unabhängig von Lieferketten.

Erfindungsgemäß kann oder können die weiteren zweiten Basisfunkstationen autark mit deutlich reduziertem Ausfallrisiko, etwa durch eine Beschädigung von Kabeln, arbeiten. Darüber hinaus wird die Flexibilität deutlich erhöht und die Komplexität und die Kosten sind zugleich reduziert. Dies erweist insbesondere im Feldeinsatz wie insbesondere sich räumlich stets neu formierenden Baustellen als besonders vorteilhaft.

Mittels des erfindungsgemäßen Verfahrens resultiert eine reduzierte Systemkomplexität für ein industrielles Edge-Cloud-System, da die Anwendungskommunikation einerseits und die Infrastrukturkommunikation andererseits auf demselben Technologie-Stack basiert.

Zweckmäßig ist unter einem Einrichten als zusätzliche zweite Basisfunkstation zu verstehen, dass das Endgerät mit weiteren Endgeräten als zusätzliche zweite Basisfunkstation kommunizieren kann. Besonders bevorzugt wird bei dem erfindungsgemäßen Verfahren die zweite Basisfunkstation derart eingerichtet, dass sie von Endgeräten zur Nutzung der zweiten Basisfunkstation keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt wird das Endgerät derart als zweite Basisfunkstation eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Grundsätzlich können in Weiterbildungen der Erfindung sämtliche Endgeräte, welche die zur Realisierung einer zweiten Basisfunkstation erforderlichen Hardwarefunktionen, wie insbesondere Rechenressourcen oder Funkkommunikationsmittel, aufweisen, als zusätzliche zweite Basisfunkstation eingerichtet werden. Auf diese Weise sind Edge-Cloud-Systeme vorteilhaft leicht skalierbar. Eine spezielle Hardware ist für die Realisierung weiterer Basisfunkstationen nicht erforderlich, sondern grundsätzlich können mit entsprechenden Hardwareressourcen ausgestattete Endgeräte mittels angepasster Konfiguration und angepasster Software als weitere Basisfunkstationen eingerichtet und herangezogen werden. In vorteilhaften und bevorzugten Weiterbildungen der Erfindung lassen sich die industriellen Edge-Cloud-Systeme auch autonom nutzen, etwa mittels solar- oder batteriebetriebener Endgeräte.

Entsprechend ist in einer bevorzugten Weiterbildung der Erfindung das Verfahren computerimplementiert, d. h. die Verfahrensschritte des Einrichtens des Endgeräts als zusätzliche zweite Basisfunkstation erfolgt mittels einer entsprechenden Installation und/oder Konfiguration und/oder eines Startens einer Software auf dem betreffenden Endgerät. Ferner wird das Heranziehen des Endgeräts als zusätzliche zweite Basisfunkstation bevorzugt mittels eines softwarebasierten Kommunikationsprotokolls realisiert.

Vorteilhaft lässt sich das erfindungsgemäße Verfahren mittels kaskadierter Anwendung skalieren, soweit die technische und physikalische Kommunikationsbandbreite ausreicht. Nachfolgend wird die Erfindung anhand eines in der Zeichnung dargestellten Ausführungsbeispiels näher erläutert.

Bevorzugt wird bei dem erfindungsgemäßen Verfahren das Endgerät als solche zweite Basisfunkstation herangezogen, welche zur Kommunikation mittels zwei oder mehr Kommunikationsprotokollen eingerichtet ist. In dieser Weiterbildung dient die zweite Basisfunkstation nicht allein zur Anwendung eines einzigen Kommunikationsprotokolls, sondern die zusätzliche zweite Basisfunkstation kann die Aufgaben herkömmlicher Basisfunkstationen vollumfänglich übernehmen.

Zweckmäßig ist bei dem Verfahren gemäß der Erfindung die erste und/oder zweite Basisfunkstation zur Kommunikation nach dem 3GPP-Standard ausgebildet.

Geeigneterweise ist in einer vorteilhaften Weiterbildung des erfindungsgemäßen Verfahrens die zweite Basisfunkstation zur Vermittlung von Kommunikationsverbindungen von zwei oder mehr Endgeräten miteinander ausgebildet. Auf diese Weise bildet die zweite Basisfunkstation nicht allein einen Uplink für weitere zusätzliche Endgeräte, sondern die zweite Basisfunkstation bildet einen vollumfänglichen Provider für sämtliche Kommunikationsverbindungen weiterer Endgeräte.

Bevorzugt ist bei dem erfindungsgemäßen Verfahren die zweite Basisfunkstation zur Vermittlung von Kommunikationsverbindungen mindestens eines mit der zweiten Basisfunkstation verbundenen Endgeräts mit einer Cloud des Edge-Cloud-Systems ausgebildet. In dieser Weiterbildung der Erfindung können sich die weiteren Endgeräte, die mit der zweiten Basisfunkstation verbunden werden, einfach mittels der zweiten Basisfunkstation mit der Cloud verbinden und somit ein Edge-Cloud-System ausbilden.

Vorzugsweise ist bei dem Verfahren gemäß der Erfindung das drahtlose industrielle Edge-Cloud-System ein Fertigungssystem und/oder ein Wartungssystem und/oder ein Logistiksystem. Insbesondere in den vorgenannten industriellen Anwendungsfällen ist die durch das erfindungsgemäße Verfahren bereitgestellte Flexibilität und unaufwändige Erweiterbarkeit besonders vorteilhaft.

Besonders bevorzugt wird bei dem erfindungsgemäßen Verfahren das Endgerät derart als zweite Basisfunkstation herangezogen, dass die zweite Basisfunkstation selbst eine eigene Funkzelle aufbaut.

Bevorzugt stellt in einer Weiterbildung des erfindungsgemäßen Verfahrens dabei die zweite Basisfunkstation mindestens eine eigene Frequenz zur Kommunikation mit weiteren Endgeräten zur Verfügung, die sich von der Frequenz oder den Frequenzen, mit welchen die zweite Basisfunkstation mit der ersten Basisfunkstation in Kommunikationsverbindung steht, unterscheidet.

Vorzugsweise wird bei dem Verfahren gemäß der Erfindung das Endgerät derart als zweite Basisfunkstation herangezogen, dass die zweite Basisfunkstation für die Kommunikation mit weiteren Endgeräten mindestens ein weiteres Kanalzugriffsverfahren nutzt, welches verschieden ist von den Kanalzugriffsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Vorzugsweise wird bei dem erfindungsgemäßen Verfahren das Endgerät derart als zweite Basisfunkstation herangezogen, dass die zweite Basisfunkstation für die Kommunikation mit weiteren Endgeräten mindestens ein weiteres Authentifizierungsverfahren nutzt, welches verschieden ist von den Authentifizierungsverfahren, welche Kommunikationsverbindungen von erster Basisfunkstation und zweiter Basisfunkstation miteinander und Kommunikationsverbindungen von erster Basisfunkstation und weiteren Endgeräten miteinander nutzen.

Besonders zweckmäßig wird bei dem Verfahren gemäß der Erfindung das bei 5G und/oder 6G etablierte Slicing herangezogen, um Kommunikationsverbindungen zwischen erster Basisfunkstation und der zweiten Basisfunkstation einerseits und der zweiten Basisfunkstation und weiteren Endgeräten andererseits zu trennen.

Mittels der vorgenannten Weiterbildungen der Erfindung kann eine gegenseitige Beeinflussung der Kommunikation zwischen der ersten Basisfunkstation und der zweiten Basisfunkstation einerseits und der zweiten Basisfunkstation und weiteren Endgeräten andererseits minimiert werden.

Besonders zweckmäßig wird bei dem erfindungsgemäßen Verfahren das Endgerät, welches einerseits als zweite Basisfunkstation herangezogen wird, nach wie vor als Endgerät genutzt. In dieser Weiterbildung der Erfindung übernimmt das Endgerät also nicht allein die Funktion der zweiten Basisfunkstation, sondern fungiert nach wie vor als Endgerät mit von der Funktion der zweiten Basisfunkstation verschiedenen Funktionen.

Bevorzugt wird bei dem erfindungsgemäßen Verfahren das Endgerät derart als zweite Basisfunkstation herangezogen, dass die zweite Basisfunkstation Kernfunktionalitäten der ersten Basisfunkstation, insbesondere die SMO-Funktion/en und/oder die CORE-Funktion/en, nutzt.

Bevorzugt wird bei dem erfindungsgemäßen Verfahren die Konfiguration des Endgeräts mittels, insbesondere von, der ersten Basisfunkstation festgelegt, während dieses Endgerät als zweite Basisfunkstation herangezogen wird.

Bei dem erfindungsgemäßen Verfahren wird zweckmäßig die Kommunikationsverbindung von erster Basisfunkstation und zweiter Basisfunkstation für solche Endgeräte, welche sich mit der zweiten Basisfunkstation verbinden, transparent gehalten.

Die erfindungsgemäße Basisfunkstation ist ausgebildet zur Teilnahme als erste Basisfunkstation an einem erfindungsgemäßen Verfahren wie vorhergehend beschreiben. Die erfindungsgemäße erste Basisfunkstation ist ausgebildet, eine Kommunikationsverbindung zu einem Endgerät aufzubauen und das Endgerät als zusätzliche zweite Basisfunkstation heranzuziehen und einzurichten. Insbesondere ist die erste Basisfunkstation ausgebildet, eine Authentisierung und/oder Provisionierung und/oder Konfiguration des Endgeräts als zweite Basisfunkstation vorzunehmen.

Die Basisfunkstation ist als erste Basisfunkstation vorzugsweise ausgebildet, mittels der Kommunikationsverbindung Kommunikationsverbindungen der zweiten Basisfunkstation mit der Cloud zu vermitteln. Die erste Basisfunkstation stellt also die Funktionalitäten für das zweite Basisfunkstation fungierende Endgerät bereit.

Das erfindungsgemäße Endgerät ist zur Teilnahme an einem erfindungsgemäßen Verfahren wie vorhergehend beschrieben ausgebildet und eingerichtet. Das erfindungsgemäße Endgerät ist zur Kommunikationsverbindung mit einer ersten Basisfunkstation eines drahtlosen industriellen Edge-Cloud-Systems eingerichtet und ausgebildet, eine Funktion als weitere, zweite, Basisfunkstation zu übernehmen und weitere Kommunikationsverbindungen dieser Funktion über die Kommunikationsverbindung mit der ersten Basisfunkstation des drahtlosen industriellen Edge-Cloud-Systems zu vermitteln.

Zweckmäßig ist das erfindungsgemäße Endgerät derart eingerichtet, dass es beim Übernehmen der Funktion als zweite Basisfunkstation von weiteren Endgeräten keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt ist das erfindungsgemäße Endgerät derart eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

In einer bevorzugten Weiterbildung des erfindungsgemäßen Endgeräts umfasst die Kommunikationsverbindung der Funktion eine Kommunikationsverbindung in eine Cloud des drahtlosen industriellen Edge-Cloud-Systems.

Bevorzugt ist oder umfasst das erfindungsgemäße Endgerät ein Fertigungsgerät und/oder ein Wartungsgerät und/oder ein Logistikgerät.

Nachfolgend wird die Erfindung anhand eines in der Zeichnung dargestellten Ausführungsbeispiels näher erläutert.

Die Zeichnungsfigur 1 zeigt ein drahtloses industrielles Edge-Cloud-System mit einem Ausführungsbeispiel einer erfindungsgemäßen Basisfunkstation und einem Ausführungsbeispiel eines erfindungsgemäßen Endgeräts zur Ausführung eines Ausführungsbeispiels eines erfindungsgemäßen Verfahrens schematisch in einer Prinzipskizze.

Im gezeigten Ausführungsbeispiel wird ein drahtloses industrielles Edge-Cloud-System betrieben. Dieses industrielle Edge-Cloud-System ist im dargestellten Ausführungsbeispiel ein Fertigungssystem. In weiteren, nicht eigens dargestellten Ausführungsbeispielen kann das industrielle Edge-Cloud-System auch ein Wartungssystem oder ein Logistiksystem sein.

Bei dem dargestellten Edge-Cloud-System wird eine eingesetzte mobile Kommunikationstechnologie des Edge-Cloud-Systems, hier 5G, sowohl für die Realisierung der Backbone-Kommunikation als auch für die Benutzer-/Anwendungskommunikation auf der Grundlage bestehender Benutzerkommunikationskonzepte und -technologien mobiler Kommunikationssystem herangezogen. Grundsätzlich kann in weiteren nicht eigens dargestellten Ausführungsbeispielen die Kommunikationstechnologie auch eine 6G-Technologie oder eine sonstige mobile Kommunikationstechnologie sein.

Zur Durchführung des erfindungsgemäßen Verfahrens wird im dargestellten Ausführungsbeispiel eine neue Systemkomponente, vorliegend als Infrastruktur-Endgerät IUE bezeichnet, herangezogen.

Das dargestellte industrielle Edge-Cloud-System umfasst eine Standard-5G-Systeminfrastruktur LECS und genügt dem 3GPP-Standard. Die Standard-5G-Systeminfrastruktur LECS lässt sich auch als Basis-5G-System bezeichnen und unterstützt definierte Ressourcenzuordnungen inklusive Garantien für eine Quality-of-Service, etwa für Slices in 5G-Systemen, und ist für die Kommunikation mit Endgeräten AUE und nachfolgend erläuterten Infrastrukturendgeräten IUE konfiguriert.

Das industrielle Edge-Cloud-System ist so konfiguriert, dass Kommunikationsverbindungen zu Infrastrukturkomponenten der Standard-5G-Systeminfrastruktur LECS, beispielsweise mittels sogenannten "Slicings", mit einer Anzahl definierter Qualitätskriterien möglich sind. Solche Infrastrukturkomponenten umfassen in an sich bekannter Weise Service-Management-/Orchestration-Einrichtungen SMO, grundlegende Basiseinrichtungen CORE sowie zentralisierte Einheiten, sogenannte "centralized units", CU und verteilte Einheiten, sogenannte "decentralized units", DU. Diese Infrastrukturkomponenten können auch als Backbone-Komponenten bezeichnet werden. Die Infrastrukturkomponenten stellen die internen Funkzugangsnetzkomponenten der Standard-5G-Systeminfrastruktur LECS dar.

Ferner umfasst die Standard-5G-Systeminfrastruktur LECS Basisfunkstationen RU, die eine direkt mit der Standard-5G-Systeminfrastruktur LECS kommunikationsverbunden sind und welche einerseits den Infrastrukturkomponenten Kommunikationsverbindungen untereinander sowie zu nicht zur Standard-5G-Systeminfrastruktur LECS gehörenden Endgeräten AEU und in die Cloud ermöglichen. Andererseits ermöglichen diese Basisfunkstationen RU auch Endgeräten AUE, welche nicht zu den Infrastrukturkomponenten der Standard-5G-Systeminfrastruktur LECS zählen, Kommunikationsverbindungen untereinander und mittels der Standard-5G-Systeminfrastruktur LECS in die Cloud. Diese Basisfunkstationen RU können unterschiedliche Frequenzen für die Kommunikation mit Endgeräten AUE und nachfolgend beschriebenen Infrastrukturendgeräten IUE verwenden.

Teil des dargestellten industriellen Edge-Cloud-Systems sind allerdings nicht allein die Endgeräte AUE und die Standard-5G-Systeminfrastruktur LECS. Es tritt eine spezielle Gruppe von Endgeräten hinzu, welche als Infrastruktur-Endgeräte IUE bezeichnet werden.

Diese Infrastrukturendgeräte IUE sind dazu ausgebildet und eingerichtet, Kommunikationsverbindungen zur Standard-5G-Systeminfrastruktur LECS derart einzurichten, dass die Infrastrukturendgeräte IUE Backbone-Kommunikationsverbindungen zu weiteren Endgeräten AUE zur Verfügung stellen.

Die Infrastrukturendgeräte IUE kommunizieren mit der Standard-5G-Systeminfrastruktur LECS, also dem lokalen 5G-Kommunikationssystem, über eine definierte Ressourcenzuweisung, beispielsweise mittels 5G-Slices, um die Infrastrukturendgeräte IUE mit der lokalen Standard-5G-Systeminfrastruktur LECS zu verbinden.

Die Infrastrukturendgeräte IUE selbst verfügen ebenfalls über Infrastrukturkomponenten wie verteilte Einheiten rDU des Infrastrukturgeräts IUE. Zudem umfassen die Infrastrukturendgeräte IUE zusätzlich jeweils mindestens ein eigenes Remote-Funkmodul rRU. Die verteilten Einheiten rDU der Infrastrukturendgeräte IUE verwalten und betreiben die Remote-Funkmodule rRU der Infrastrukturendgeräte IUE.

Die Infrastrukturendgeräte IUE verbinden sich selbst mittels ihrer eigenen Remote-Funkmodule rRU mit den Kernkomponenten der Standard-5G-Systeminfrastruktur LECS und richten hiermit Backbone-Kommunikationsverbindungen für Benutzerverkehr, Signalisierung und Verwaltung für weitere Endgeräte AUE ein.

Basierend auf dieser Backbone-Kommunikation zur Standard-5G-Systeminfrastruktur LECS bieten die Infrastrukturendgeräte IUE mittels ihrer eigenen Remote-Funkmodule rRU zusätzlich Kommunikationsverbindungen zu weiteren Endgeräten AUE an, die normalerweise nicht im Abdeckungsbereich der mit der Standard-5G-Systeminfrastruktur LECS verbundenen Basisfunkstationen RU liegen.

Die weiteren Endgeräte AUE stellen herkömmliche "normale" Endgeräte dar, beispielsweise ein industrielles Handgerät oder einen industriellen 5G-Router. Es wird für die Kommunikation zwischen Benutzeranwendungsendpunkten auf anderen UEs oder in einem Back-End-System verwendet.

Die Remote-Funkmodule rRU der Infrastrukturendgeräte IUE bieten Funkzugriff auf weitere Endgeräte AUE ohne versehentliche Störung ihrer eigenen Kommunikationsverbindung zur Standard-5G-Systeminfrastruktur LECS.

Somit ist eine Reichweitenerweiterung der lokalen Kommunikation durch effiziente Wiederverwendung der vorhandenen (gleichen) Kommunikationstechnologie möglich - ohne die Notwendigkeit einer nahtlosen Integration verschiedener Technologien.

## Patentansprüche

1. Verfahren zum Betreiben eines drahtlosen industriellen Edge-Cloud-Systems mit einer Systeminfrastruktur (LECS) nach 3GPP-Standard, welche für eine Kommunikation mit mindestens einem Endgerät (IUE) konfiguriert ist, wobei die Systeminfrastruktur (LECS) mehrere direkt mit der Standard-Systeminfrastruktur (LECS) kommunikationsverbundene Basisfunkstationen (RU) umfasst, wobei zwischen der Standard-Systeminfrastruktur LECS und mindestens einer ersten Basisfunkstation (RU), eine Kommunikationsverbindung zu einem Endgerät (IUE) über eine definierte Ressourcenzuweisung, insbesondere mittels Slices aufgebaut wird, um die Endgeräte IUE mit der Systeminfrastruktur (LECS) zu verbinden und das Endgerät (IUE) als zusätzliche zweite Basisfunkstation (rRU) herangezogen und eingerichtet wird, wobei die zusätzliche zweite Basisfunkstation (rRU) derart eingerichtet wird, dass sie mit den Kernkomponenten der Systeminfrastruktur (LECS) verbundene Backbone-Kommunikationsverbindungen für Benutzerverkehr, Signalisierung und Verwaltung für weitere Endgeräte (AUE) einrichtet, um von den weiteren Endgeräten (AUE) zur Nutzung der zweiten Basisfunkstation (rRU) keine abweichenden oder zusätzlichen Zugangscredentials und/oder Authentisierungsinformationen oder Anmeldeinformationen abzufragen und/oder fordern als die erste Basisfunkstation (RU) abfragt und/oder fordert.

2. Verfahren nach dem vorgenannten Patentanspruch, bei welchem das Endgerät (IUE) als solche zusätzliche zweite Basisfunkstation (rRU) betrieben wird, welche zur Kommunikation mittels zwei oder mehr Kommunikationsprotokollen eingerichtet ist.

3. Verfahren nach einem der vorgenannten Patentansprüche, bei welchem die mindestens eine erste Basisfunkstation (RU) zur Kommunikation nach dem 3GPP-Standard ausgebildet ist.

4. Verfahren nach einem der vorgenannten Patentansprüche, bei welchem die zusätzliche zweite Basisfunkstation (rRU) zur Vermittlung von Kommunikationsverbindungen von zwei oder mehr Endgeräten (AUE) miteinander ausgebildet ist.

5. Verfahren nach einem der vorgenannten Patentansprüche, bei welchem die zusätzliche zweite Basisfunkstation (rRU) zur Vermittlung von Kommunikationsverbindungen mindestens eines Endgeräts (AUE) mit einer Cloud des Edge-Cloud-Systems ausgebildet ist.

6. Verfahren nach einem der vorgenannten Patentansprüche, bei welchem das drahtlose industrielle Edge-Cloud-System ein Fertigungssystem und/oder ein Wartungssystem und/oder ein Logistiksystem ist.

7. Basisfunkstation, ausgebildet zur Teilnahme als erste Basisstation (RU) an einem Verfahren nach einem der vorhergehenden Ansprüche, welche ausgebildet ist, eine Kommunikationsverbindung zu einem Endgerät (IUE) aufzubauen und das Endgerät (IUE) als zusätzliche zweite Basisfunkstation (rRU)zu betreiben.

8. Basisfunkstation nach Patentanspruch 7, welche ausgebildet ist, mittels der Kommunikationsverbindung zu dem Endgerät (IUE) weitere Kommunikationsverbindungen der zweiten Basisfunkstation (rRU) mit der Cloud zu vermitteln.

9. Endgerät, ausgebildet zur Teilnahme an einem Verfahren nach einem der vorhergehenden Ansprüche 1 bis 7, welches zur Kommunikationsverbindung mit einer ersten Basisstation (RU) eines drahtlosen industriellen Edge-Cloud-Systems eingerichtet ist und welches ausgebildet ist, eine Funktion als zusätzliche zweite Basisfunkstation (rRU) zu übernehmen und weitere Kommunikationsverbindungen in dieser Funktion über die Kommunikationsverbindung mit der ersten Basisstation (RU) des drahtlosen industriellen Edge-Cloud-Systems zu vermitteln.

10. Endgerät nach dem vorhergehenden Anspruch 9, bei welchem die Kommunikationsverbindung der Funktion eine Kommunikationsverbindung in eine Cloud des drahtlosen industriellen Edge-Cloud-Systems umfasst.

11. Endgerät nach einem der vorhergehenden Ansprüche 9 bis 10, welches ein Fertigungsgerät und/oder ein Wartungsgerät und/oder ein Logistikgerät ist oder umfasst.

## Claims

1. Method for operating a wireless industrial edge cloud system comprising a system infrastructure (LECS) in accordance with the 3GPP standard, configured for communication with at least one terminal (IUE), wherein the system infrastructure (LECS) comprises multiple radio base stations (RU) that are communicatively connected directly to the standard system infrastructure (LECS), wherein a communication link to a terminal (IUE) is set up between the standard system infrastructure LECS and at least one first radio base station (RU) via a defined resource allocation, in particular by way of slices, in order to connect the terminals IUE to the system infrastructure (LECS), and the terminal (IUE) is used and configured as an additional second radio base station (rRU), wherein the additional second radio base station (rRU) is configured such that it sets up backbone communication links, connected to the core components of the system infrastructure (LECS), for user traffic, signalling and management for further terminals (AUE), so as not to query and/or request any different or additional access credentials and/or authentication information or logon information than the first radio base station (RU) queries and/or requests from the further terminals (AUE) for use of the second radio base station (rRU).

2. Method according to the preceding claim, in which the terminal (IUE) is operated as an additional second radio base station (rRU) that is configured to communicate using two or more communication protocols.

3. Method according to either of the preceding claims, in which the at least one first radio base station (RU) is designed to communicate in accordance with the 3GPP standard.

4. Method according to one of the preceding claims, in which the additional second radio base station (rRU) is designed to convey communication links between two or more terminals (AUE).

5. Method according to one of the preceding claims, in which the additional second radio base station (rRU) is designed to convey communication links between at least one terminal (AUE) and a cloud of the edge cloud system.

6. Method according to one of the preceding claims, in which the wireless industrial edge cloud system is a manufacturing system and/or a maintenance system and/or a logistics system.

7. Radio base station, designed to participate in a method according to one of the preceding claims as a first base station (RU), designed to set up a communication link to a terminal (IUE) and to operate the terminal (IUE) as an additional second radio base station (rRU).

8. Radio base station according to Claim 7, designed to convey further communication links between the second radio base station (rRU) and the cloud by way of the communication link to the terminal (IUE).

9. Terminal, designed to participate in a method according to one of preceding Claims 1 to 7, configured to create a communication link with a first base station (RU) of a wireless industrial edge cloud system and designed to take on a function as an additional second radio base station (rRU) and to convey further communication links in this function via the communication link with the first base station (RU) of the wireless industrial edge cloud system.

10. Terminal according to preceding Claim 9, in which the communication link of the function comprises a communication link to a cloud of the wireless industrial edge cloud system.

11. Terminal according to either of preceding Claims 9 and 10, being or comprising a manufacturing device and/or a maintenance device and/or a logistics device.

## Revendications

1. Procédé destiné à l'exploitation d'un système de nuage périphérique industriel sans fil avec une infrastructure système (LECS) selon la norme 3GPP qui est configurée pour une communication avec au moins un terminal (IUE), dans lequel l'infrastructure système (LECS) comprend plusieurs stations radio de base (RU) reliées en communication directement avec l'infrastructure système standard (LECS), dans lequel entre l'infrastructure système standard (LECS) et au moins une première station radio de base (RU), une liaison de communication avec un terminal (IUE) est établie par le biais d'une attribution de ressources définie, en particulier au moyen de tranches, pour relier les terminaux (IUE) à l'infrastructure système (LECS) et le terminal (IUE) est utilisé et configuré en tant que seconde station radio de base (rRU) supplémentaire, dans lequel la seconde station radio de base (rRU) supplémentaire est configurée de telle sorte qu'elle configure des liaisons de communication dorsale reliées aux composants de l'infrastructure système (LECS) pour un trafic utilisateur, une signalisation et une administration pour d'autres terminaux (AUE), pour ne pas demander et/ou exiger des identifiants d'accès et/ou des informations d'authentification ou des informations de connexion différents ou supplémentaires des autres terminaux (AUE) destinés à l'utilisation de la seconde station de base radio (rRU) que ce que demande et/ou exige la première station de base radio (RU).

2. Procédé selon la revendication précédente, dans lequel le terminal (IUE) est exploité en tant que seconde station radio de base (rRU) supplémentaire, qui est configurée pour une communication au moyen de deux protocoles de communication ou plus.

3. Procédé selon l'une quelconque des revendications précédentes, dans lequel l'au moins une première station radio de base (RU) est réalisée pour une communication selon la norme 3GPP.

4. Procédé selon l'une quelconque des revendications précédentes, dans lequel la seconde station radio de base (rRU) supplémentaire est réalisée pour une transmission de liaisons de communication par deux terminaux (AUE) ou plus entre eux.

5. Procédé selon l'une quelconque des revendications précédentes, dans lequel la seconde station radio de base (rRU) supplémentaire est réalisée pour une transmission de liaisons de communication d'au moins un terminal (AUE) avec un nuage du système de nuage périphérique.

6. Procédé selon l'une quelconque des revendications précédentes, dans lequel le système de nuage périphérique industriel sans fil est un système de production et/ou un système de maintenance et/ou un système de logistique.

7. Station radio de base, réalisée pour une participation en tant que première station de base (RU) à un procédé selon l'une quelconque des revendications précédentes, qui est réalisée pour établir une liaison de communication avec un terminal (IUE) et exploiter le terminal (IUE) en tant que seconde station radio de base (rRU) supplémentaire.

8. Station radio de base selon la revendication 7, qui est réalisée pour transmettre d'autres liaisons de communication de la seconde station radio de base (rRU) avec le nuage au moyen de la liaison de communication avec le terminal (IUE).

9. Terminal, réalisé pour une participation à un procédé selon l'une quelconque des revendications précédentes 1 à 7, qui est configuré pour une liaison de communication avec une première station de base (RU) d'un système de nuage périphérique industriel sans fil et qui est réalisé pour prendre en charge une fonction en tant que seconde station radio de base (rRU) supplémentaire et transmettre d'autres liaisons de communication dans cette fonction par le biais de la liaison de communication avec la première station de base (RU) du système de nuage périphérique industriel sans fil.

10. Terminal selon la revendication précédente 9, dans lequel la liaison de communication de la fonction comprend une liaison de communication dans un nuage du système de nuage périphérique industriel sans fil.

11. Terminal selon l'une quelconque des revendications précédentes 9 à 10, qui est ou comprend un appareil de production et/ou un appareil de maintenance et/ou un appareil de logistique.
